## Europäisches Patentamt

## European Patent Office

## Office européen des brevets

(19)

(11) Veröffentlichungsnummer: **0 033 451**
**B1**

(12) # EUROPÄISCHE PATENTSCHRIFT

(45) Veröffentlichungstag der Patentschrift:
06.06.84

(51) Int. Cl.³: **H 04 Q 3/54,** H 04 Q 3/42

(21) Anmeldenummer: 81100273.2

(22) Anmeldetag: 15.01.81

(54) Schaltungsanordnung für Fernmeldevermittlungsanlagen, insbesondere Fernsprechvermittlungsanlagen, mit Speichereinrichtungen für Steueraufträge.

(30) Priorität: 31.01.80 DE 3003496

(43) Veröffentlichungstag der Anmeldung:
12.08.81 Patentblatt 81/32

(45) Bekanntmachung des Hinweises auf die Patenterteilung:
06.06.84 Patentblatt 84/23

(84) Benannte Vertragsstaaten:
AT CH FR GB IT LI NL SE

(56) Entgegenhaltungen:
DE - A - 2 614 615
DE - A - 2 901 931
DE - A - 2 903 457

(73) Patentinhaber: SIEMENS AKTIENGESELLSCHAFT,
Berlin und München Wittelsbacherplatz 2,
D-8000 München 2 (DE)

(72) Erfinder: Frank, Reinhard, Dipl.-Ing.,
Mauthäuslstrasse 19, D-8000 München 70 (DE)

BUNDESDRUCKEREI BERLIN

**Beschreibung**

Die Erfindung betrifft eine Schaltungsanordnung für Fernmeldeanlagen, insbesondere Fernsprechvermittlungsanlagen, in denen Speicherglieder zur individuellen Speicherung von mit Zeitverzug auszuführenden Steueraufträgen anhand von Speichergliedadressen sowohl mittels einer Ansteuerschreibeinrichtung zum Einschreiben von Steueraufträgen als auch mittels einer Ansteuerleseeinrichtung zum Auslesen gespeicherter Steueraufträge ansteuerbar sind, und in denen ebenfalls mit Hilfe der Ansteuerschreibeinrichtung in jedem der Speicherglieder zusätzlich zu dem jeweiligen Steuerauftrag eine Hinweisadresse speicherbar ist, durch die jeweils ein weiteres Speicherglied adressierbar ist, wodurch mittels einer in einer Speichereinheit gespeicherten Adresse eines der Speicherglieder und mittels der in jedem der Speicherglieder gespeicherten Hinweisadresse jeweils diese Speichereinheit mit Speichergliedern zu einer Kette zusammengefügt wird, in der die in der Speichereinheit gespeicherte Speichergliedadresse und jede der in den Speichergliedern gespeicherten Adressen auf das in der Kette jeweils nachgeordnete Speicherglied hinweist, und in denen bei Speicherung eines Steuerauftrages in einem hierzu neu ausgewählten und im Zusammenhang mit dem Soll-Zeitpunkt der Durchführung dieses Steuerauftrages einer bestimmten Speichereinheit zuzuordnenden Speicherglied einerseits bei der betreffenden Speichereinheit die in ihr gespeicherte Speichergliedadresse ausgelesen und in jener gelöscht und als Hinweisadresse in dem neu ausgewählten Speicherglied gespeichert wird, und andererseits dessen Speichergliedadresse in der betreffenden Speichereinheit gespeichert wird, und in denen eine taktgesteuerte Zähleinrichtung vorgesehen ist, anhand deren jeweils erreichten Zählerstandes von der Speichereinheit angegeben wird, bei welchen der Speicherglieder Ansteuerlesevorgänge zeitlich fällig sind und dementsprechend eingeleitet werden.

Durch die DE-A-2 614 615 ist es bereits bekannt, eine Mehrzahl von Speichergliedern vorzusehen und in der zuvor beschriebenen Weise mittels gespeicherter Speichergliedadressen jeweils miteinander zu verketten. Bei Aufruf werden nacheinander mit ihr mittels der gespeicherten Adressen verkettete Speicherglieder angesteuert, und es werden die in ihnen gespeicherten Steueraufträge ausgelesen. Bei Speicherung eines Steuerauftrages in einem bis dahin freien Speicherglied wird dieses in die Kette eingefügt. Die Verkettung eines zur Speicherung eines Steuerauftrages neu verwendeten Speichergliedes mit der Kette von Speichergliedern kann dem Zweck dienen, jeweils nur eine Anzahl von Speichergliedern in gleichmäßigen Zeitabständen anzusteuern und die in ihnen gespeicherten Steueraufträge zur Ausführung zu bringen. Sie können aber auch in einem anderen Zusammenhang angesteuert werden. Zum Beispiel kann es vorgesehen sein, bei Erfüllung bestimmter Betriebsbedingungen aufgrund eines Ablaufes vorgegebener Betriebsabläufe verkettete Speicherglieder anzusteuern und die in ihnen gespeicherten Steueraufträge zur Ausführung zu bringen. Eine solche Betriebsbedingung kann z. B. nach Anwahl eines Teilnehmers das Eintreffen eines entsprechenden Meldekennzeichens nach Eintreffen des Wahlendekennzeichens und gleichzeitigem Weiterbestehen der Verbindung vom rufenden Teilnehmer her sein. In Abhängigkeit von der Erfüllung dieser Betriebsbedingung kann es z. B. erforderlich sein, eine Sprechwegverbindung durchzuschalten und eine Aussendung von Gebührenzählimpulsen einzuleiten. Hierzu kann es vorgesehen sein, bei Erfüllung der erwähnten Betriebsbedingung die verketteten Speicherglieder anzusteuern.

Weiterhin kann in einem der betreffenden Speicherglieder der Steuerauftrag zur Durchschaltung der Sprechwegverbindung gespeichert sein, und es kann in einem weiteren Speicherglied der Steuerauftrag zum Beginn einer Aussendung von Gebührenzählimpulsen gespeichert sein. Die Speicherung eines neuen Steuerauftrages in einem hierzu auszuwählenden und bisher freien Speicherglied macht es erforderlich, dieses Speicherglied mittels seiner Adresse mit der Kette von Speichergliedern zu verknüpfen.

In dem oben genannten bekannten Fall ist ein »gesonderter Speicherabschnitt« vorgesehen, der einen Zeitwert angibt. Sämtliche »weiteren Speicherabschnitte« sind zu einer Kette zusammengefügt. Für eine zeitgerechte Ansteuerung speichert jeder weitere Speicherabschnitt ein Zeitwort; von den weiteren Speicherabschnitten liegen einerseits diejenigen mit gleichen gespeicherten Zeitworten in der Adressenverknüpfung direkt hintereinander und andererseits diejenigen mit verschiedenen Zeitworten in der Reihenfolge der Zeitwerte dieser Zeitworte hintereinander. Die Speicherabschnitte werden immer beginnend mit dem »Speicherabschnitt« angesteuert, und das in jedem jeweils gespeicherte Zeitwort wird jedesmal mit einem von einem zentralen Zählglied gegebenen Zeitwort verglichen; bei Übereinstimmung wird der betreffende Funktionsablauf ausgelöst, d. h. eingeleitet.

Bei der bekannten Anordnung werden also mit dem von einem Taktgeber gesteuerten Zählglied jeweils erreichten und von ihm abgegebenen Zeitwort die in einem gesonderten Speicherabschnitt und in weiteren Speicherabschnitten jeweils gespeicherten Zeitwörter verglichen, und bei jeweiliger Zeitwortübereinstimmung wird jeweils ein in jedem der betreffenden Speicherabschnitte eingeschriebener Funktionsablauf eingeleitet; hierzu sind sämtliche Speicherabschnitte, die mit einem Zeitwort belegt sind, über Folgeadressen miteinander verknüpft, wobei diese Adressenverknüpfung die Speicherabschnitte im bekannten Falle zu einer Kette aneinanderreiht. Diese Kette beginnt im bekannten Falle mit dem gesonderten Speicherabschnitt und setzt sich in den durch Adressenverknüpfung aneinandergereihten weiteren Speicherabschnitten fort, und zwar in einer durch die Zeitwörter bestimmten Reihenfolge. Deshalb ist es erforderlich, die weiteren Speicherabschnitte nach den Folgeadressen der Adreßverknüpfung anzusteuern und jedes Mal das gespeicherte Zeitwort mit dem im zentralen Zeitglied stehenden Zeitwort zu vergleichen. Wenn dieser Vergleich Übereinstimmung ergibt, erfolgt die Einleitung des betreffenden Funktionsablaufes.

Für die Erfindung besteht die Aufgabe, hinsichtlich der Abwicklung von Funktionsabläufen und des dadurch bedingten Zeitbedarfes in einer Schaltungsanordnung der eingangs angegebenen Art die Ansteuerung der zu einem jeweils erreichten Zeitpunkt auszulesenden Speicherglieder zu vereinfachen und zu beschleunigen. Dies gilt insbesondere für den sehr häufig vorliegenden Fall, daß die Anzahl der jeweils zu einem Zeitpunkt auszulesenden Funktionsabläufe eine größere ist.

Die Erfindung löst die ihr gestellte Aufgabe dadurch, daß in einer geordneten Folge eine Mehrzahl von Speichereinheiten vorgesehen ist, daß entsprechend mehrere voneinander unabhängige Ketten von Speichergliedern gebildet sind, indem mit jeweils einer der Speichereinheiten jeweils immer nur Speicherglieder mit gleichzeitig oder nahezu gleichzeitig auszuführenden gespeicherten Steueraufträgen durch die gespeicherten Hinweisadressen verknüpft sind, und daß die Ansteuerleseeinrichtung den Zählerstand der Zähleinrichtung dadurch angibt, daß sie hierzu von der Zähleinrichtung sukzessive nacheinander einzeln auf die Speichereinheiten eingestellt wird, um anhand der aus der durch die Einstellung der Ansteuerleseeinrichtung jeweils bezeichneten Speichereinheit auszulesenden Speichergliedadresse die Kette nur derjenigen Speicherglieder anzusteuern, die der jeweils erreichten Speichereinheit durch Adressenverknüpfung mittels der Hinweisadressen zugeordnet ist.

Erfindungsgemäß sind also die Speichereinheiten (eine solche Speichereinheit ist in gewissem Maße mit dem im bekannten Falle genannten »gesonderten Speicherabschnitt« vergleichbar), in einer Mehrzahl vorgesehen, von denen jede Speichereinheit einem anderen Zeitwert entspricht. Die Speicherglieder sind zu mehreren voneinander unabhängigen Ketten vereinigt, jede mit je einer gesonderten Speichereinheit als jeweiligem erstem Glied der betreffenden Kette. Für eine zeitgerechte Ansteuerung der Speicherglieder bilden die Speichereinheiten eine stetige Folge und werden von der von der Zähleinrichtung gesteuerten Ansteuerleseeinrichtung sukzessive angesteuert; jeder Speichereinheit entspricht dabei ein bestimmter Zeitwert. Nach Ansteuerung einer Speichereinheit aufgrund des vom Zähler erreichten Zählerstandwertes werden nur die mit jeweils dieser Speichereinheit adressenverknüpften Speicherglieder gezielt anhand der Verknüpfungsadressen nacheinander angesteuert, und die dadurch gegebenen betreffenden Funktionsabläufe gemäß den mehreren Speichergliedern der betreffenden Kette werden eingeleitet.

Im Gegensatz zur bekannten Anordnung sieht der Anmeldungsgegenstand also anstelle eines Zählgliedes eine Mehrzahl von in einer Folge geordneten Speichereinheiten vor, die von einer taktgesteuerten Ansteuerleseeinrichtung in einem festen Rhythmus angesteuert werden. Ferner weicht der Anmeldungsgegenstand darin von der Entgegenhaltung ab, daß in den Speichereinheiten und den Speichergliedern keine Zeitwörter gespeichert sind; ferner sind beim Anmeldungsgegenstand nur solche Speicherglieder miteinander jeweils zu einer Kette mittels gespeicherter Folgeadressen verknüpft, die hinsichtlich des Beginnes eines auszulösenden Funktionsablaufes zeitgleich sind; also nur mit zu gleichem Soll-Zeitpunkt auszulösenden Steuerbefehle beschriebene Speicherglieder sind per Folgeadressen miteinander jeweils zu einer Kette verknüpft. Ferner ist beim Anmeldungsgegenstand jede dieser mehreren Ketten (von denen also jede immer nur einem individuellen Funktionsablauf-Auslösungszeitpunkt zugeordnet ist — also die verschiedenen Ketten unterschiedlichen solchen Zeitpunkten!) mit einer Speichereinheit durch Folgeadresse verknüpft. An die verschiedenen Speichereinheiten sind also lauter voneinander unabhängige Ketten von Speichergliedern per Folgeadressen angeknüpft, und zwar jede jeweils an eine andere Speichereinheit, die den Funktionsablauf-Auslösungszeitpunkt festlegt. Dadurch erübrigt sich nicht nur die Speicherung von Zeitwörtern, sondern auch ein Auslesen derselben und damit der hierfür im bekannten Falle erforderliche Zeitaufwand. Dadurch wird nicht nur insgesamt Zeit gespart, sondern die durch die sukzessive Ansteuerung der betreffenden Speicherglieder bedingten zeitlichen Differenzen zwischen den exakten Zeitpunkten der Auslösung jedes der verschiedenen Funktionsabläufe, die ja eigentlich alle genau zu ein und demselben Zeitpunkt stattfinden sollten, werden mit Hilfe des Anmeldungsgegenstandes wesentlich kleiner gehalten.

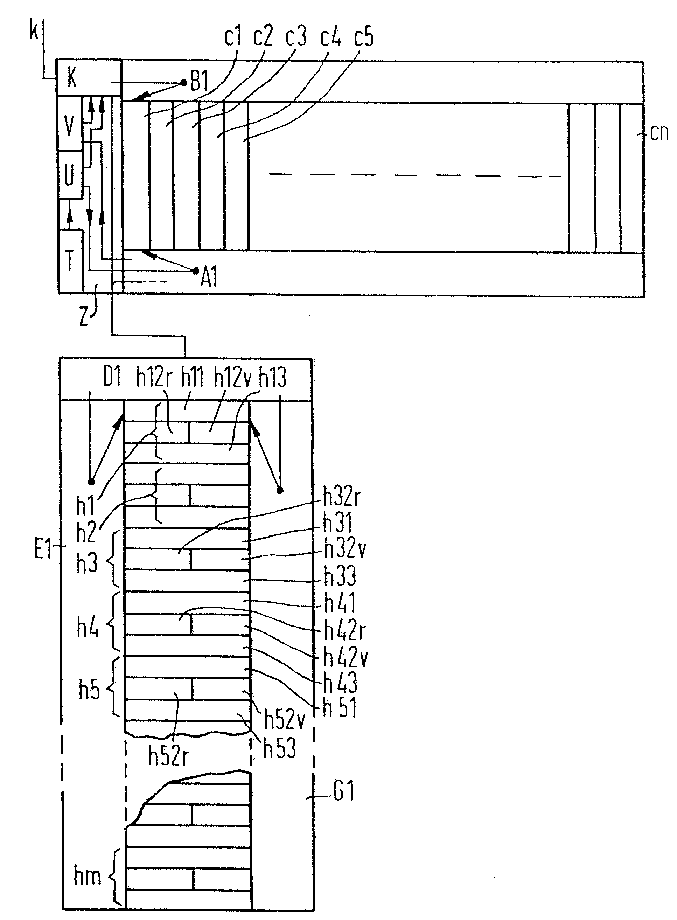

In der Zeichnung ist ein Ausführungsbeispiel der Erfindung nur in wesentlich zu ihrem Verständnis beitragenden Bestandteilen dargestellt.

Das Ausführungsbeispiel stellt ein zentrales Zeitzählglied eines Zentralsteuerwerkes oder einer teilzentralen Steuereinrichtung in einer Fernmeldevermittlungsanlage, insbesondere Fernsprechvermittlungsanlage dar. Eine solche Anlage ist z. B. in der deutschen Offenlegungsschrift 2 744 118 dargestellt und beschrieben.

In der Fernsprechvermittlungstechnik besteht vielfältig die Aufgabe, Zeitspannen abzumessen, sei es, um von anderer Seite unter Berücksichtigung von Zeitbedingungen gesteuerte Schaltvorgänge hinsichtlich der Einhaltung dieser Zeitbedingungen abzumessen, sei es, um bei der Steuerung von Schaltvorgängen vorgegebene Zeitbedingungen zu erfüllen. Diese Schaltvorgänge können sowohl periphere Schalteinrichtungen als auch teilzentrale oder zentrale Schalteinrichtungen, z. B. ein Zentralsteuerwerk, betreffen. Bei peripheren Schalteinrichtungen, wie z. B. Internverbindungssätzen, Leitungsabschlußschaltungen, Wahlempfangseinrichtungen und dergleichen, sind Schaltkennzeichen aufzunehmen und auszusenden. Bei diesen Schaltkennzeichen kann es sich um Wahlimpulse von nacheinander eintreffenden Wahlimpulsserien, um Wahlendekennzeichen, Meldekennzeichen, Zählimpulse und dergleichen, handeln, also Schaltkennzeichen, bei denen die zeitliche Dauer maßgebend ist für die Indentifikation hinsichtlich der jeweils vorliegenden Schaltkennzeichenart. Es ist bekannt, die Aufnahme sowie die Aussendung solcher Schaltkennzeichen zentralgesteuert abzuwickeln. In diesem Fall erfolgt die Zeitabmessung für einen abzumessenden Schaltvorgang oder einen unter Zeitbedingung zu steuernden Schaltvorgang in Zusammenhang mit der jeweiligen Adresse derjenigen peripheren Schalteinrichtung, in der der betreffende Schaltvorgang stattfindet.

Es ist üblich, periphere Schalteinrichtungen von einer zentralen Schalteinrichtung mit Hilfe von den peripheren Schalteinrichtungen individuell zugeordneten Adressen anzusteuern (vgl. deutsche Patentschrift 1 537 849). Deshalb erfolgt die Zeitabmessung für die peripheren Schalteinrichtungen in der zentralen Schalteinrichtung jeweils in Zusammenhang mit der Adresse der betreffenden peripheren Schalteinrichtung.

Im oberen Teil der Zeichnung ist eine Reihe von Speichereinheiten c1, c2 bis cn dargestellt, die gemäß einer zyklischen Folge geordnet sind. Diese Reihe von Speichereinheiten setzt sich hinter der Speichereinheit cn, also mit der Speichereinheit c1 fort. Den Speichereinheiten sind eine erste Ansteuereinrichtung A1 und eine zweite Ansteuereinrichtung B1 zugeordnet. Die erste Ansteuereinrichtung A1 steuert die einzelnen Speichereinheiten gemäß ihrer zyklischen Folge sukzessive nacheinander und in gleichmäßigen Zeitabständen an, um in den Speichereinheiten gespeicherte Adressen von Speichergliedern h1 bis hm (und weiteren) auszulesen, die dann mittels dieser Adressen angesteuert werden, und aus denen Steueraufträge ausgelesen werden, die zur Einleitung von Schaltvorgängen insbesondere in verbindungsindividuellen Schalteinrichtungen dienen.

Die erste Ansteuereinrichtung A1 weist u. a. eine Ablaufsteuerung Z auf, die einen Taktgeber T und zwei Zähler U und V aufweist. Der Taktgeber T liefert in bekannter Weise in regelmäßigen Zeitabständen Taktimpulse, die die Grundlage der Zeitabmessung bilden. Der Zähler U wird mit Hilfe der Taktimpulse regelmäßig weitergeschaltet und die laufend veränderten Werte dieses Zählers dienen als Ansteueradressen für die erste Ansteuereinrichtung. Die Anzahl der Zählwerte, die der Zähler U annehmen kann, entspricht der Anzahl von Speichereinheiten. Hat der Zähler U seinen höchsten Wert erreicht, so beginnt er in bekannter Weise seinen Zählvorgang wieder von vorne.

Der Zähler V wird bei jedem Ansteuerzyklus der Ansteuereinrichtung A1 weitergeschaltet, z. B. je einmal bei einem vollen Ansteuerzyklus, wenn die Ansteuereinrichtung von der in der Reihe letzten Speichereinheit cn zu der in der Reihe ersten Speichereinheit c1 weitergeschaltet wird. Hat der Zähler V seinen höchsten Wert erreicht, so beginnt auch er in bekannter Weise seinen Zählvorgang von vorne.

Mit der ersten Ansteuereinrichtung A1 und ihrer Ablaufsteuerung Z stehen weitere Ansteuereinrichtungen und zwar eine dritte Ansteuereinrichtung E1 und eine vierte Ansteuereinrichtung G1 in Verbindung, welchen eine Ablaufsteuerung D1 zugeordnet ist. Die Ablaufsteuerungen Z und D1 stehen also in Zusammenarbeit. Sie können auch miteinander vereinigt sein. Ebenfalls können die Ansteuereinrichtungen A1 und E1 sowie die Ansteuereinrichtungen B1 und G1 auch miteinander vereinigt sein; erstere sind Leseeinrichtungen während letztere Schreibeinrichtungen sind. Da beide Funktionen auch mit einer Ansteuereinrichtung realisiert werden können, können auch alle vier Ansteuereinrichtungen miteinander vereinigt sein.

Die Ansteuereinrichtungen A1 und E1 dienen also zum Auslesen des Speicherinhaltes der Speichereinheiten c1 bis cn bzw. der Speicherglieder h1 bis hm. Bei den Ansteuereinrichtungen B1 und G1 handelt es sich um Schreibeinrichtungen zur Einspeicherung von Informationen in die Speichereinheiten bzw. Speicherglieder.

Im Gegensatz zu den Speichereinheiten werden die Speicherglieder h1 bis hm (und weitere) nicht in zyklischer Folge sukzessive nacheinander und in gleichmäßigen Zeitabständen angesteuert, sondern die Ansteuerung der Speicherglieder erfolgt gemäß den mit Hilfe der Ansteuereinrichtung A1 aus den Speichereinheiten ausgelesenen Adressen von Speichergliedern. Diese Adressen werden also von der Ansteuereinrichtung A1 aus den Speichereinheiten ausgelesen und zur Steuerung der Ansteuereinrichtung E1 verwendet. Die außerdem vorgesehenen Ansteuereinrichtungen B1 und G1 sind — wie bereits angegeben — Schreibeinrichtungen. Zunächst soll die Ansteuereinrichtung B1 genauer beschrieben werden.

Wie bereits angeführt wurde, steuert die Ansteuereinrichtung A1 die einzelnen Speichereinheiten gemäß ihrer zyklischen Folge sukzessive nacheinander und in gleichmäßigen Zeitabständen an, um anhand von in den Speichereinheiten gespeicherten Adressen Speicherglieder anzusteuern. Der Stand der Ansteuereinrichtung A1 wechselt also in diesen Zeitabständen von Speichereinheit zu Speichereinheit. Die Ansteuereinrichtung B1 kann dagegen von der Ablaufsteuerung Z zu jedem Zeitpunkt frei auf eine beliebige der Speichereinheiten eingestellt werden. Zur Speicherung einer Adresse eines Speichergliedes zu einem dem augenblicklichen Stand der Ansteuereinrichtung A1 entsprechenden Zeitpunkt wird die Ansteuereinrichtung B1 mit einer die zyklische Folge betreffenden und sich auf den augenblicklichen Stand der ersten Ansteuereinrichtung beziehenden Voreilung auf eine Speichereinheit eingestellt, die unter Berücksichtigung der gleichmäßigen Zeitabstände zu einem um eine erste Zeitspanne späteren Zeitpunkt von der ersten Ansteuereinrichtung angesteuert wird. Diese erste Zeitspanne ist das Produkt aus dem Zeitabstand zwischen zwei aufeinanderfolgenden Ansteuervorgängen der Ansteuereinrichtung A1 einerseits und aus der der Voreilung entsprechenden Anzahl von Speichereinheiten. Ist in einem bestimmten Zeitpunkt die Ansteuereinrichtung A1 z. B. auf die Speichereinheit c3 eingestellt und beträgt — wie zuvor angenommen — die erforderliche Voreilung 20 Speichereinheiten, so ist zwecks Einspeicherung mit Hilfe der Ansteuereinrichtung B1 diese auf eine Speichereinheit c23 (nicht dargestellt) einzustellen.

Die Speichereinheiten sind durch ihre Lage im Speicher definiert. Sie können — wie dargestellt — mit Hilfe von Adressen über die beiden Ansteuereinrichtungen A1 und B1 angesteuert werden. Hierbei handelt es sich also um Adressen von Speichereinheiten. In den Speichereinheiten sind Adressen von Speichergliedern h1 bis hm speicherbar. Hierzu dienen die mit c1, c2, . . ., cn bezeichneten Speichereinheiten. Die Speicherglieder sind ebenfalls durch ihre räumliche Lage im Speicher definiert. Sie sind mit Hilfe von Speichergliedadressen ansteuerbar. Diese Speichergliedadressen können in den Speichereinheiten gespeichert werden. Auf diese Weise kann einer Speichereinheit ein Speicherglied zugeordnet werden, indem in der betreffenden Speichereinheit die betreffende Speichergliedadresse gespeichert wird. Wird nun mit Hilfe der Ansteuereinrichtung A1 eine Speichereinheit angesteuert, so wird die betreffende Speichergliedadresse aus dieser Speichereinheit ausgelesen und über die Ablaufsteuerungen Z und D1 weitergegeben und zur Ansteuerung des betreffenden Speichergliedes mittels der Ansteuereinrichtung E1 verwendet. Sodann wird ein in dem betreffenden Speicherglied gespeicherter Steuerauftrag mit Hilfe der Ansteuereinrichtung E1 und der Ablaufsteuerung D1 ausgelesen. Dieser Steuerauftrag ist jeweils in der dritten Zeile, z. B. h13 des betreffenden Speichergliedes, z. B. h1 gespeichert. Dieser Steuerauftrag enthält u. a. auch die Adresse einer verbindungsindividuellen Schalteinrichtung sowie Informationen darüber, was für ein Schaltvorgang in der betreffenden verbindungsindividuellen Schalteinrichtung eingeleitet werden soll.

Ist für eine verbindungsindividuelle Schalteinrichtung ein bestimmter Schaltauftrag zu speichern, der nach einem bestimmten Zeitraum ausgeführt werden soll, so wird zunächst der Ablaufsteuerung Z ein diesem gegebenen Zeitraum entsprechender Zeitwert über einen Eingang k zugeführt. Dieser Zeitwert wird von einer Teilungseinrichtung K aufgenommen und in einen ersten Zeitwert und einen zweiten Zeitwert aufgeteilt. Der erste Zeitwert gibt die Anzahl von Ansteuerzyklen der ersten Ansteuereinrichtung A1 an, die — zeitlich betrachtet — in dem gegebenen Zeitraum enthalten sind. Der zweite Zeitwert gibt die Anzahl von Ansteuervorgängen der ersten Ansteuereinrichtung A1 an, die — ebenfalls zeitlich betrachtet — außerdem noch in dem gegebenen Zeitraum enthalten sind.

Wie bereits ausgeführt wurde, sind zwei Zähler U und V vorgesehen. Der erste Zähler U wird bei jedem Taktimpuls des Taktgebers T weitergeschaltet. Seine Zählerstellungen werden als Adressen der ersten Ansteuereinrichtung A1 zugeführt, die die Speichereinheiten in zyklischer Reihenfolge ansteuert und bei jedem Weiterschalten von der letzten Speichereinheit cn zur ersten Speichereinheit c1 einen Zählimpuls zum zweiten Zähler V abgibt, der jedesmal hierbei um einen Schritt weitergeschaltet wird.

Die Teilungseinrichtung K entnimmt zum Zeitpunkt der vorzunehmenden Einspeicherung des genannten Schaltauftrages beiden Zählern die augenblicklichen Zählerstandswerte. Sie erhöht den Zählerstandswert des Zählers U um den genannten zweiten Zeitwert und führt diesen erhöhten Wert als Adresse der Ansteuereinrichtung B1 zu. In diesem Zeitpunkt, in dem sich die Ansteuereinrichtung A1 in einer bestimmten Stellung befindet, in der sie eine bestimmte Steuereinheit ansteuert, wird also die zweite Ansteuereinrichtung B1 mit der die zyklische Folge betreffenden und sich auf die augenblickliche Stellung der ersten Ansteuereinrichtung beziehenden Voreilung auf diejenige der Speichereinheiten eingestellt, die unter Berücksichtigung der gleichmäßigen Zeitabstände zwischen den Ansteuerungsvorgängen der Ansteuereinrichtung A1 zu einem um den zweiten Zeitwert späteren Zeitpunkt von der ersten Ansteuereinrichtung A1 angesteuert wird. In die über die Ansteuereinrichtung B1 angesteuerte Speichereinheit, z. B. c5, wird die Adresse eines freien der Speicherglieder h1 bis hm eingespeichert. Hierzu wählt die Ansteuereinrichtung E1 eines der freien Speicherglieder aus. Es sei angenommen, daß das Speicherglied h4 ausgewählt wird. Die Adresse dieses Speichergliedes wird nunmehr mit Hilfe der Ablaufsteuerungen D1 und Z und mit Hilfe der Ansteuereinrichtung B1 in die Speichereinheit c5 eingeschrieben. Dadurch wird das Speicherglied h4 mittels seiner Adresse mit der Speichereinheit c5 verkettet. In die dritte Zahl h43 des Speichergliedes h4 wird mittels der Ansteuereinrichtung G1 der betreffende Steuerauftrag eingespeichert. Außerdem wird in die Zeile h42r des Speichergliedes h4 als Rückweiseadresse die Adresse der Speichereinheit c5 eingespeichert. Nunmehr befindet sich also in der Speichereinheit c5 ein gespeicherter Adressenhinweis auf das Speicherglied h4 sowie in diesem, und zwar in dessen Speicherzeile h42r, ein gespeicherter Adressenhinweis auf die Speichereinheit c5.

Wie ausgeführt wurde, entnimmt die Teilungseinrichtung K zum Zeitpunkt der vorzunehmenden Einspeicherung des genannten Schaltauftrages den beiden Zählern U und V die augenblicklichen Zählerstandswerte. Außer dem entnommenen Zählerstandswert des Zählers U erhöht sie auch den entnommenen Zählerstandswert des Zählers V, und zwar um den bereits weiter oben erwähnten ersten Zeitwert. Die Teilungseinrichtung K führt nun diesen erhöhten Zählerstandswert der Ablaufsteuerung D1 zu, die ihn an die Ansteuereinrichtung G1 weiterleitet. Diese Ansteuereinrichtung war zuvor auf die dritte Zeile h43 des Speichergliedes h4 eingestellt worden. Nunmehr stellt die Ablaufsteuerung D1 die Ansteuereinrichtung G1 auf die Zeile h41 des Speichergliedes h4 ein und bewirkt, daß der um den genannten ersten Zeitwert erhöhte Zählerstandswert des Zählers V in der Zeile h41 des Speichergliedes h4 eingespeichert wird.

Es kann nun vorkommen, daß in Zuordnung zu ein- und demselben zukünftigen Zeitpunkt zugleich mehrere voneinander unabhängige Steueraufträge gespeichert werden müssen. Dies bedeutet, daß mit einer Speichereinheit außer einem ersten Speicherglied ein weiteres Speicherglied zu verketten ist. Zunächst wird mit Hilfe der Ansteuereinrichtung E1 ein freies Speicherglied ermittelt. Es möge sich hierbei z. B. um das Speicherglied h3 handeln. Der betreffende Steuerauftrag wird nun in der dritten Zeile h33 dieses Speichergliedes mit Hilfe der Ansteuereinrichtung G1 gespeichert, die hierzu die Adresse des Speichergliedes h3 von der Ansteuereinrichtung E1 über die Ablaufsteuerung D1 empfängt.

In der weiter oben beschriebenen Weise wird im Zusammenhang mit der Aufnahme des neuen Steuerauftrages mittels der Ablaufsteuerung Z der betreffende Zeitwert wieder in einen ersten Zeitwert und einen zweiten Zeitwert aufgeteilt. Der augenblickliche Zählerstandswert des Zählers V wird diesem entnommen und um den ersten Zeitwert erhöht und in der Zeile h31 des Speichergliedes h3 eingespeichert. Der augenblickliche Zählerstandswert des Zählers U wird diesem entnommen und um den genannten zweiten Zeitwert erhöht. Der sich ergebende Wert, also eine Summe aus Zählerstandswert des Zählers U und zweitem Zeitwert, wird wieder in der beschriebenen Weise zur Einstellung der Ansteuereinrichtung B1 auf eine Speichereinheit verwendet, um in dieser die Adresse desjenigen Speichergliedes einzuschreiben, das bereits zur Speicherung des neuen Steuerauftrages zuvor ausgewählt wurde.

Im zuletzt beschriebenen Beispiel wurde davon ausgegangen, daß zur Speicherung eines neuen Steuerauftrages ein Speicherglied, nämlich das Speicherglied h3, zufällig mit einer solchen Speichereinheit, nämlich mit der Speichereinheit c5, durch Adressenspeicherung zu verketten ist, mit dem bereits ein anderes Speicherglied, nämlich das Speicherglied h4, verkettet ist. Dementsprechend ist in der betreffenden Speichereinheit c5 bereits eine Adresse und zwar die Adresse dieses anderen Speichergliedes h4 gespeichert. In Ergänzung der bisherigen Beschreibung sei nun nachgeholt, daß die Ansteuereinrichtung B1, die gemäß dem um den zweiten Zeitwert erhöhten Zählerstandswert des Zählers U zur Speicherung der Adresse des Speichergliedes h3 auf die betreffende Speichereinheit c5 eingestellt ist, zunächst prüft, ob in dieser Speichereinheit bereits die Adresse eines Speichergliedes gespeichert ist. Ist dies nicht der Fall, so laufen die Vorgänge so ab, wie weiter oben beschrieben. Ist dies aber doch der Fall, wie zuletzt angenommen, so entnimmt die Ansteuereinrichtung B1 die bis dahin in der betreffenden Speichereinheit c5 gespeicherte Adresse des bis dahin als erstes mit dieser Speichereinheit c5 verknüpften Speichergliedes h4 und speichert stattdessen die Adresse des zur Speicherung des neuen Steuerauftrages unter den freien Speichergliedern ausgewählten Speichergliedes h3 in der betreffenden Speichereinheit c5 ein. Die Ansteuereinrichtung B1, die also zusätzlich auch die Funktion des Lesens auszuüben vermag, überträgt die bisher in der Speichereinheit c5 gespeicherte, ihr entnommene und hier gelöschte Speichergliedadresse des Speichergliedes h4 an die Ansteuereinrichtung G1. Diese speichert diese Speichergliedadresse, also die des Speichergliedes h4, in der Zeile h32v des neu belegten Speichergliedes h3 ein.

Durch die zuvor beschriebenen Schaltvorgänge gelangt das zuerst unmittelbar mit der Speichereinheit c5 adressenmäßig verknüpfte Speicherglied h4 an die zweite Stelle der mit der Speichereinheit c5 verknüpften Kette, während das zur Speicherung des neuen Steuerauftrages ausgewählte, bisher freie Speicherglied an die erste Stelle dieser Kette der Speicherglieder tritt, die mit der Speichereinheit c5 adressenmäßig verknüpft sind. Bei diesen Schaltvorgängen kann vorgesehen sein, die der Speichereinheit c5 durch die Ansteuereinrichtung B1 entnommene Adresse des Speichergliedes h4 in der Ansteuereinrichtung B1 zunächst zwischenzuspeichern, dann die Adresse des Speichergliedes h3 in der Speichereinheit c5 zu speichern und anschließend die Adresse des Speichergliedes h4 zur Ansteuereinrichtung G1 zwecks Speicherung in der Zeile h3v des Speichergliedes h3 zu übertragen. Ebenso gut kann aber hierbei auch vorgesehen sein, die der Speichereinheit c5 durch die Ansteuereinrichtung B1 entnommene Adresse des Speichergliedes h4 sofort an die Ansteuereinrichtung G1 zu übertragen und die Adresse des Speichergliedes h3 danach in der Speichereinheit c5 zu speichern.

Wenn mit einer Speichereinheit bereits eine größere Anzahl von Speichergliedern zu einer Kette adressenmäßig verknüpft ist, wird bei Hinzufügung eines weiteren Speichergliedes zu dieser Kette in der gleichen Weise verfahren, wie bereits beschrieben. Dieses Speicherglied wird in der beschriebenen Weise mit der dieser Kette zugeordneten Speichereinheit direkt verknüpft, während das bisher erste Glied dieser Kette mit dem neuen Speicherglied adressenmäßig verknüpft wird und demgemäß an die zweite Stelle dieser Kette tritt. Je länger eine bereits bestehende Kette von Speichergliedern ist, desto größer ist die Ersparnis an Schaltvorgängen im Vergleich zu einer Anordnung, wie sie in der bereits erwähnten deutschen Offenlegungsschrift 2 903 457 (veröffentlicht 7. 8. 80) (Seite 5, Zeile 8 ff) beschrieben ist. Im Falle dieser Offenlegungsschrift ist es nämlich erforderlich, daß die Ansteuereinrichtung G1 anhand der in der betreffenden Speichereinheit gespeicherten Adresse des ersten Speichergliedes dieser Kette und anhand der in jedem der Speicherglieder dieser Kette gespeicherten Hinweisadressen das bis dahin letzte Glied dieser Kette ausfindig macht, um dann an dieses das weitere Speicherglied adressenmäßig anzuknüpfen. Dieser Aufwand an Schaltvorgängen wird erfindungsgemäß ganz wesentlich eingeschränkt.

In der zuvor beschriebenen Weise können also im Rahmen der insgesamt verfügbaren Speicherglieder beliebig lange Ketten von Speichergliedern gebildet werden, und zwar jeweils eine Kette in Zuordnung zu einer der Speichereinheiten c1 bis cn. Die gemäß der Zeichnung in einer Spalte untereinander, d. h. in einer bestimmten Reihenfolge angeordneten Speicherglieder können völlig unabhängig voneinander zu Ketten von Speichergliedern zusammengefügt werden, wobei die Reihenfolge der Speicherglieder keine Rolle spielt. Die Verknüpfung der Speicherglieder zu Ketten in der zuvor beschriebenen Weise fügt also Speicherglieder in ganz beliebiger Reihenfolge aneinander. Für diese Verknüpfung dient die Eintragung der Speichergliedadressen, und zwar in einem Speicherglied jeweils im rechten Teil der zweiten Zeile der Speichergliedadresse des in der Kette jeweils nachgeordneten Speichergliedes (Hinweisadresse) und im linken Teil der zweiten Zeile die Speichergliedadresse des in der Kette jeweils vorgeordneten Speichergliedes (Rückweiseadresse); wie ausgeführt wurde, wird bei einem in einer Kette ersten Speicherglied im linken Teil der zweiten Zeile die Adresse derjenigen Speichereinheit eingespeichert, der die betreffende Kette von Speichergliedern jeweils zugeordnet ist.

Wie zuvor bereits angedeutet wurde, ist in jedem der Speicherglieder, und zwar jeweils im linken Teil der zweiten Zeile eines jeden Speichergliedes, eine Rückweiseadresse speicherbar, durch die das in einer Kette von Speichergliedern jeweils vorgeordnete Speicherglied bzw. die Speichereinheit bezeichnet ist, mit welcher diese Kette mittels der gespeicherten Hinweisadressen verknüpft ist. Die Speicherglieder werden also zu einer Kette adressenmäßig zweifach verknüpft, und zwar einerseits mittels der Hinweisadressen und andererseits mittels der Rückweiseadressen.

Wird nun einer bereits bestehenden und mit einer Speichereinheit verknüpften Kette von Speichergliedern ein weiteres Speicherglied hinzugefügt, in das ein neuer Steuerauftrag eingespeichert wurde, so tritt dieses neue Speicherglied in der betreffenden Kette von Speichergliedern an die erste Stelle, während das bisher an erster Stelle stehende Speicherglied an die zweite Stelle weiterrückt. Wie dies hinsichtlich der abzuwickelnden Schaltvorgänge bewerkstelligt wird, wurde bereits im Hinblick auf die Hinweisadressen erläutert. In Ergänzung des obigen Funktionsbeispieles wird anschließend beschrieben, wie hinsichtlich der Rückweiseadressen verfahren wird.

Es wird wieder davon ausgegangen, daß mit der Speichereinheit c5 zunächst das Speicherglied h4 adressenmäßig verknüpft ist. Dementsprechend ist im linken Teil h42r der zweiten Zeile des Speichergliedes h4 als Rückweiseadresse die Adresse der Speichereinheit c5 gespeichert. Ist nun dieser Kette von Speichergliedern zusätzlich das Speicherglied h3 hinzuzufügen, so wird die Ansteuereinrichtung G1 mit Hilfe der Adresse des Speichergliedes h4, die sie von der Ablaufsteuerung D1 enthält, auf die zweite Zeile des Speichergliedes h4 eingestellt. Danach erhält die Ansteuereinrichtung G1 die Adresse des Speichergliedes h3, damit sie diese in den linken Teil h42r der zweiten Zeile des Speichergliedes h4 einspeichert. Außerdem wird die Ansteuereinrichtung G1 auf die zweite Zeile des Speichergliedes h3 eingestellt. Diese Speichergliedadresse erhält die Ansteuereinrichtung G1 über die Ablaufsteuerung D1 von der Ansteuereinrichtung E1, die zuvor das Speicherglied h3 als frei ausgewählt hatte. Die Ansteuereinrichtung G1 erhält nun über die Ablaufsteuerungen D1 und Z die Adresse der Speichereinheit c5, um diese in den linken Teil h32r der zweiten Zeile des Speichergliedes h3 einzuspeichern. Dadurch ist erreicht, daß in jedem der beiden Speicherglieder h4 und h3 das in dieser Kette von Speichergliedern jeweils vorgeordnete Speicherglied bzw. die Speichereinheit bezeichnet ist, mit welcher diese Kette mittels der gespeicherten Hinweisadressen verknüpft ist. Dies wird ganz allgemein dadurch erreicht, daß bei Steuerung eines Steuerauftrages in einem hierzu ausgewählten und im Zusammenhang mit dem Steuerauftrag einer bestimmten Speichereinheit zuzuordnenden Speicherglied die Adresse dieser Speichereinheit als Rückweiseadresse in diesem Speicherglied gespeichert wird, und daß die Adresse dieses Speichergliedes anstelle der Adresse der genannten Speichereinheit in demjenigen Speicherglied als Rückweiseadresse gespeichert wird, welches bis zur Speicherung des genannten Steuerauftrages in der betreffenden Kette von Speichergliedern an erster Stelle gestanden hat und danach an zweiter Stelle steht.

Wie bereits ausgeführt ist, kann es vorkommen, daß aus einer Kette von Speichergliedern ein Speicherglied wieder herauszunehmen ist. Dies ist der Fall, wenn in dem betreffenden Speicherglied ein Steuerauftrag gespeichert ist, der gegenstandslos geworden ist. Dies kann der Fall sein, wenn ein auf die Einhaltung einer Zeitbedingung zu überwachender Schaltvorgang bereits vor dem Überwachungszeitpunkt stattgefunden hat. In einem solchen Fall ist die weitere Überwachung des betreffenden Schaltvorganges auf Einhaltung der jeweiligen Zeitbedingung nicht mehr erforderlich. Deshalb kann der betreffende Steuerauftrag bereits vorzeitig gelöscht werden. Es sei angenommen, daß im zuvor beschriebenen Funktionsbeispiel der in Zeile h33 des Speichergliedes h3 gespeicherte Steuerauftrag zu löschen ist, bevor die Ansteuereinrichtung A1 bis zu der betreffenden Speichereinheit weitergeschaltet worden ist, bzw. bevor der Zählerzustandswert des Zählers V den in der ersten Zeile des betreffenden Speichergliedes gespeicherten Wert erreicht hat. Mit Hilfe der Ansteuereinrichtung E1 wird dasjenige Speicherglied aufgesucht, in dem der betreffende Steuerauftrag in der dritten Zeile gespeichert ist. Die Ansteuereinrichtung E1 sucht also das Speicherglied h3 auf. Sie löscht den in der Zeile h33 gespeicherten Steuerauftrag. Ferner entnimmt die Ansteuereinrichtung E1 aus den beiden Teilen h32v und h32r der zweiten Zeile h32 des Speichergliedes h3 die Adresse des in der Kette von Speichergliedern jeweils nachgeordneten Speichergliedes, z. B. des Speichergliedes h5, und die Adresse des in dieser Kette vorgeordneten Speichergliedes h4. Die Ansteuereinrichtung E1 übergibt die beiden Adressen der Ansteuereinrichtung G1. Diese steuert das in der Kette vorgeordnete Speicherglied h4 an, löscht in diesem die Adresse des Speichergliedes h3 im rechten Teil h42v der zweiten Zeile und speichert dafür als Hinweisadresse die Adresse des Speichergliedes h5, die zuvor im rechten Teil h32r der zweiten Zeile des Speichergliedes h3 gespeichert war. Ferner steuert die Ansteuereinrichtung G1 das Speicherglied h5 an und löscht in diesem die Adresse des Speichergliedes h3 im linken Teil h52r der zweiten Zeile und speichert dafür als Rückweiseadresse die Adresse des Speichergliedes h4 ein, die bis dahin im linken Teil h32r der zweiten Zeile des Speichergliedes h3 gespeichert war. Die Ablaufsteuerung Z findet einen zu löschenden Steuerauftrag anhand der betreffenden Zeitdaten und anhand der zusammen mit dem Steuerauftrag gespeicherten Adresse der betreffenden Schalteinrichtung auf.

Die Ansteuereinrichtung A1 steuert — wie bereits erläutert wurde — in gleichmäßigen Zeitabständen die Speichereinheiten c1 bis cn an und entnimmt ihnen die jeweils gespeicherte Speichergliedadresse, die über die Ablaufsteuerungen Z und D1 der Ansteuereinrichtung E1 zugeführt wird. Bei jedem der Ansteuervorgänge der Ansteuervorrichtung E1 wird auch der Zählerstand des Zählers V diesem entnommen und an die Ablaufsteuerung D1 übertragen. Mit Hilfe der mittels der Ansteuereinrichtung A1 aus einer der Speichereinheiten gewonnenen Speichergliedadresse wird nun also das betreffende Speicherglied über die Ansteuereinrichtung E1 angesteuert. Sodann wird geprüft, ob der in der ersten Zeile dieses Speichergliedes gespeicherte erhöhte Zählerstandswert (Zähler V) mit dem inzwischen vom Zähler V tatsächlich erreichten Zählerstand übereinstimmt. Trifft dies zu, so wird der betreffende Steuerauftrag aus der dritten Zeile des angesteuerten Speichergliedes entnommen und — wie angegeben — weitergleitet, und das Speicherglied wird aus der erwähnten Kette von Speichergliedern in der bereits beschriebenen Weise herausgekettet.

Es wird auch noch die im rechten Teil der zweiten Zeile dieses Speichergliedes gespeicherte Speichergliedadresse des in der betreffenden Kette von Speichergliedern nächsten Speichergliedes ausgelesen. Mit dieser Adresse steuert die Ablaufsteuerung D1 die Ansteuereinrichtung E1 zu diesem nächsten Speicherglied. In der gleichen Weise, wie bereits beschrieben, wird überprüft, ob in dem nun angesteuerten Speicherglied der in der ersten Zeile gespeicherte erhöhte Zählerstandswert (Zähler V) mit dem vom Zähler V inzwischen tatsächlich erreichten Zählerstandswert übereinstimmt. Trifft dies zu, so wird der betreffende Steuerauftrag aus diesem Speicherglied ausgelesen, die im rechten Teil seiner zweiten Zeile gespeicherte Speichergliedadresse ausgelesen und das Speicherglied gelöscht und in der beschriebenen Weise aus der Kette von Speichergliedern ausgekettet. Stimmt der in der ersten Zeile eines in der zuvor beschriebenen Weise mittels der Ansteuereinrichtung A1 angesteuerten Speichergliedes gespeicherte erhöhte Zählerstandswert nicht mit dem inzwischen vom Zähler V erreichten Zählerstandswert überein, so wird aus diesem Speicherglied lediglich die im rechten Teil seiner zweiten Zeile gespeicherte Speichergliedadresse des in der Kette von Speichergliedern jeweils nächstfolgenden Speichergliedes ausgelesen. Der betreffende Steuerauftrag wird nicht ausgelesen und das betreffende Speicherglied wird nicht gelöscht sowie aus der Kette von Speichergliedern nicht ausgekettet. Die aus dem rechten Teil der zweiten Zeile des nicht gelöschten Speichergliedes ausgelesene Speichergliedadresse wird dazu verwendet, das in der Kette von Speichergliedern nächstfolgende Speicherglied in der beschriebenen Weise mit Hilfe der Ansteuereinrichtung E1 anzusteuern.

Bei einem in einer Kette von Speichergliedern letzten Speicherglied ist im rechten Teil der zweiten Zeile entweder keine Adresse eines weiteren Speichergliedes gespeichert, oder es wird zur Kennzeichnung dieses Sachverhaltes ein Sonderkennzeichen gespeichert. Dadurch erkennt die Ansteuereinrichtung E1, das das Ende der betreffenden Kette von Speichergliedern erreicht ist.

Bei Ansteuerung jeder der Speichereinheiten mittels der ersten Ansteuereinrichtung A1 werden also nacheinander sämtliche mit der betreffenden Speichereinheit mittels der Speichergliedadressen verketteten und dadurch vorübergehend dieser Speichereinheit zugeordneten Speicherglieder über die Ansteuereinrichtung E1 angesteuert. Die in den so miteinander verketteten Speichergliedern jeweils in der dritten Zeile gespeicherten Zählerstandswerte werden mit dem zu diesem Zeitpunkt tatsächlich erreichten Zählerstand des Zählers V verglichen, und nur bei Übereinstimmung wird der in dem betreffenden Speicherglied gespeicherte Steuerauftrag ausgelesen. Die übrigen Steueraufträge werden nicht ausgelesen.

Bei der Einspeicherung eines Steuerauftrages ist der zu dem augenblicklichen Stand der ersten Ansteuereinrichtung entsprechenden ersten Zeitpunkt (also dem Zeitpunkt der Einspeicherung) zu speichernde Zählerstandswert gegenüber dem zu diesem Zeitpunkt vorliegenden tatsächlichen Zählerstand des Zählers V bezüglich der Zählfolge um so viele Zähleinheiten im Vorsprung, wie in einer zwischen dem genannten Zeitpunkt und einem späteren Zeitpunkt liegenden, sich aus der ersten Zeitspanne und einer zweiten Zeitspanne als Summe ergebenden Gesamt-Zeitspanne ganze Ansteuerzyklus-Zeiten enthalten sind. Diese beiden Zeitpunkte entsprechen dem Beginn und dem Ende des für die Ausführung des betreffenden Steuerauftrages maßgebenden Zeitverzuges. Die zweite Zeitspanne ist das Produkt aus einer Ansteuerzyklus-Zeit der ersten Ansteuereinrichtung A1 und aus der Differenz zwischen dem zu speichernden Zählerstandswert und dem zu dem genannten Zeitpunkt der Einspeicherung des Steuerauftrages tatsächlich vorliegenden Zählerstand. Die erste Zeitspanne ist das Produkt aus dem Zeitabstand zwischen zwei aufeinanderfolgenden Ansteuervorgängen der ersten Ansteuereinrichtung und aus der der Voreilung der zweiten Ansteuereinrichtung gegenüber der ersten Steuereinrichtung entsprechenden Anzahl von Speichereinheiten bei Einspeicherung eines Steuerauftrages.

Es sei auch noch darauf hingewiesen, daß die in den Speichergliedern gespeicherten Steueraufträge zusammen mit Adressen von teilzentralen oder verbindungsindividuellen Schalteinrichtungen speicherbar sein können. In diesem Falle ist in jedem der Speicherglieder zusätzlich zu dem Speicherplatz für einen Steuerauftrag auch Speicherplatz für eine Adresse vorgesehen. — Es ist möglich, in jedem der Speicherglieder Steueraufträge zu speichern, die für mehr als eine einzige verbindungsindividuelle Schalteinrichtung gelten. In diesem Falle sind entsprechend mehrere Adressen von verbindungsindividuellen Schalteinrichtungen in dem betreffenden Speicherglied zu speichern.

Bei der bisherigen Beschreibung wurde davon ausgegangen, daß der zweite Zähler V während jedes Ansteuerzyklusses der Ansteuereinrichtung A1 je einmal weitergeschaltet wird. In Abweichung hiervon ist es auch möglich, daß der zweite Zähler V während eines Ansteuerzyklusses der Ansteuereinrichtung A1 zweimal oder mehrmals weitergeschaltet wird. In diesem Falle ist der zu dem augenblicklichen Stand der ersten Ansteuereinrichtung entsprechenden ersten Zeitpunkt (Zeitpunkt der Einspeicherung eines Steuerauftrages) zu speichernde Zählerstandswert gegenüber zu diesem Zeitpunkt vorliegenden tatsächlichen Zählerstand bezüglich der Zählfolge um dementsprechend zwei oder mehrmal so viele Zähleinheiten im Vorsprung, wie in einer zwischen diesem Zeitpunkt und einem späteren Zeitpunkt (Zeitpunkt der Ausführung des Steuerauftrages) liegenden, sich aus der ersten Zeitspanne und einer zweiten Zeitspanne als Summe ergebenden Gesamt-Zeitspanne ganze Ansteuer-Zyklus-Zeiten enthalten sind.

## Patentansprüche

1. Schaltungsanordnung für Fernmeldeanlagen, insbesondere Fernsprechvermittlungsanlagen, in denen Speicherglieder (h1, h2, ... hm) zur individuellen Speicherung von mit Zeitverzug auszuführenden Steueraufträgen anhand von Speichergliedadressen (bei c1 ... cn) sowohl mittels einer Ansteuerschreibeinrichtung (G1) zum Einschreiben von Steueraufträgen (bei h13, ... h33, ... h53) als auch mittels einer Ansteuerleseeinrichtung (A1, E1) zum Auslesen gespeicherter Steueraufträge (bei h13, ... h33, ... h53) ansteuerbar sind, und in denen ebenfalls mit Hilfe der Ansteuerschreibeinrichtung (G1) in jedem der Speicherglieder (ha, h2, ... hm) zusätzlich zu dem jeweiligen Steuerauftrag eine Hinweisadresse (bei h12v, ... h32v, ... h52v) speicherbar ist, durch die jeweils ein weiteres Speicherglied (h1, h2, ... hm) adressierbar ist, wodurch mittels einer in einer Speichereinheit (c1, ... cn) gespeicherten Adresse eines der Speicherglieder (h1, ...hm) und mittels der in jedem der Speicherglieder (h1, ... hm) gespeicherten Hinweisadresse (bei h12v, ... h32v, ... h52v) jeweils diese Speichereinheit (c1, ... cn) mit Speichergliedern (h1, ... hm) zu einer Kette zusammengefügt wird, in der die in der Speichereinheit (c1, ... cn) gespeicherte Speichergliedadresse und jede der in den Speichergliedern (h1, ... hm) gespeicherten Adressen auf das in der Kette jeweils nachgeordnete Speicherglied (h1, ... hm) hinweist, und in denen bei Speicherung eines Steuerauftrages (bei h13, ... h33, ... h53) in einem hierzu neu ausgewählten und in Zusammenhang mit dem Soll-Zeitpunkt der Durchführung dieses Steuerauftrages einer bestimmten Speichereinheit (c1, ... cn) zuzuordnenden Speicherglied (h1, ... hm) einerseits bei der betreffenden Speichereinheit (c1, ... cn) die in ihr gespeicherte Speichergliedadresse ausgelesen und in jener gelöscht und als Hinweisadresse in dem neu ausgewählten Speicherglied (h1, ... hm) gespeichert wird, und andererseits dessen Speichergliedadresse in der betreffenden Speichereinheit (c1, ... cn) gespeichert wird, und in denen eine taktgesteuerte Zähleinrichtung (T, U) vorgesehen ist, anhand deren jeweils erreichten Zählerstandes von der Speichereinrichtung (c1, ...

cn) angegeben wird, bei welchen der Speicherglieder (h1, ... hm) Ansteuerlesevorgänge zeitlich fällig sind und dementsprechend eingeleitet werden werden, dadurch gekennzeichnet, daß in einer geordneten Folge eine Mehrzahl von Speichereinheiten (c1, ... cn) vorgesehen ist, daß entsprechend mehrere voneinander unabhängige Ketten von Speichergliedern (z. B. h1, h4, hm und h2, h5) gebildet sind, indem mit jeweils einer der Speichereinheiten (z. B. c2 und c5) jeweils immer nur Speicherglieder (z. B. h1, h4, hm bzw. h2, h5) mit gleichzeitig oder nahezu gleichzeitig auszuführenden gespeicherten Steueraufträgen (bei h12, ... h53) durch die gespeicherten Hinweisadressen (bei h12v, ... h52v) verknüpft sind, und daß die Ansteuerleseeinrichtung (A1, E1) den Zählerstand der Zähleinrichtung (T, U) dadurch angibt, daß sie hierzu von der Zähleinrichtung (T, U) sukzessive nacheinander einzeln auf die Speichereinheiten (c1, ... cn) eingestellt wird, um anhand der aus der durch die Einstellung der Ansteuerleseeinrichtung (A1, E1) jeweils bezeichneten Speichereinheit (z. B. c2) auszulesenden Speichergliedadresse (z. B. von h1) die Kette nur derjenigen Speicherglieder (z. B. h1, h4, hm) anzusteuern, die der jeweils erreichten Speichereinheit (z. B. c2) durch Adressenverknüpfung mittels der Hinweisadressen zugeordnet ist.

2. Schaltungsanordnung nach Anspruch 1, dadurch gekennzeichnet, daß in jedem der Speicherglieder (h1, ... hm) eine Rückweiseadresse (bei h12r, ... h52r) speicherbar ist, durch die das in einer Kette von Speichergliedern (z. B. h1, h4, hm) jeweils vorgeordnete Speicherglied (z. B. h1, h4, hm) bzw. die Speichereinheit (z. B. c2) bezeichnet ist, mit welcher diese Kette mittels der gespeicherten Hinweisadressen verknüpft ist.

3. Schaltungsanordnung nach Anspruch 2, dadurch gekennzeichnet, daß bei Speicherung eines Steuerauftrages (bei h13, ... h53) in einem hierzu ausgewählten und in Zusammenhang mit dem Steuerauftrag einer bestimmten Speichereinheit (z. B. c2) zuzuordnenden Speicherglied (z. B. h3) die Adresse dieser Speichereinheit (z. B. c2) als Rückweiseadresse in diesem Speicherglied (z. B. in h3 bei h32r) gespeichert wird, und daß die Adresse dieses Speichergliedes (z. B. h3) anstelle der Adresse der genannten Speichereinheit (z. B. c2) in demjenigen Speicherglied (z. B. in h1 bei 12r) als Rückweiseadresse gespeichert wird, welches bis zur Speicherung des genannten Steuerauftrages in der betreffenden Kette von Speichergliedern (z. B. h1, h4, hm) an erster Stelle gestanden hat und danach an zweiter Stelle steht.

## Claims

1. Circuit arrangement for telecommunications exchanges, in particular telephone exchanges, in which storage elements (h1, h2, ... hm), which serve individually to store control instructions which are to be executed with a time delay, can be operated on the basis of storage element addresses (at c1 ... cn) both by means of a drive write arrangement (G1) which serves to write control instructions (at h13, ... h33, ... h53) and also by means of a drive read arrangement (A1, E1) which serves to read stored control instructions (at h13, ... h33, ... h53), and in which exchanges, likewise with the assistance of the drive write arrangement (G1), each of the storage elements (h1, h2, ... hm) can store, in addition to the particular control instruction, a pointer address (at h12v, ... h32v, ... h52v) by means of each of which a further storage element (h1, h2, ... hm) can be addressed, by which means, with the assistance of an address stored in a storage unit (c1, ... cn), of one of the storage elements (h1, ... hm) and with the assistance of the pointer address (at h12v, ... h32v, ... h52v) stored in each of the storage elements (h1, ... hm), this storage unit (c1, ... cn) can in each case be combined with storage elements (h1, ... hm) to form a chain in which the storage element address stored in the storage unit (c1, ... cn) and each of the addresses stored in the storage elements (h1, ... hm) points to the following storage element (h1, ... hm) in the chain, and in which exchanges, when a control instruction (at h13, ... h33, ... h53) is stored in a storage element (h1, ... hm) which is newly selected for this purpose and, in association with the nominal time of the execution of this control instruction, is to be assigned to a specific storage unit (c1, ... cn), on the one hand in the relevant storage unit (c1, ... cn) the storage element address stored therein is read out and erased in said storage unit and stored, as a pointer address, in the newly selected storage element (h1, ... hm), and on the other hand the storage element address is stored in the relevant storage unit (c1, ... cn), and in which exchanges a clock-pulse controlled counter arrangement (T, U) is provided, and with the assistance of the count of this counter arrangement reached at any given time the storage device (c1, ... cn) indicates in which of the storage elements (h1, ... hm) drive read procedures are due and are correspondingly initiated, characterized in that a plurality of storage units (c1, ... cn) is provided in an ordered sequence, that similarly a plurality of chains of storage elements (e. g. h1, h4, hm and h2, h5) which are independent of one another are formed in that any one of the storage units (e. g. c2 and c5) is only ever logiclinked, by means of the stored pointer addresses (at h12v, ... h52v), to the stored control instructions (at h12, ... h53) which are to be executed simultaneously or approximately simultaneously, and that the drive read arrangement (A1, E1) indicates the count of the counter arrangement (T, U) in that for this purpose it is set successively to the individual storage units (c1, ... cn) in sequence, with the assistance of the storage element address (e. g. of h1), to be read from the storage unit (e. g. c2) designated by the setting of the drive read arrangement (A1, E1) to drive the chain of only those storage elements (e. g. h1, h4, hm) which are assigned to the storage unit which has been reached (e. g. c2), by means of address logic-linking with the assistance of the pointer addresses.

2. Circuit arrangement as claimed in claim 1, characterized in that in each of the storage elements (h1, . . . hm) there can be stored a reject address (at h12r, . . . h52r) which designates the respective preceding storage element (e. g. h1, h4, hm) in a chain of storage elements (e. g. h1, h4, hm) and that storage unit (e. g. c2) to which this chain is logic-linked by means of the stored pointed addresses.

3. Circuit arrangement as claimed in claim 2, characterized in that when a control instruction (at h13, . . . h53) is stored in a storage element (e. g. h3) which has been selected for this purpose and, in association with the control instruction, is to be assigned to a specific storage unit (e. g. c2), the address of this storage unit (e. g. c2) is stored as a reject address in this storage element (e. g. in h3 at h32r), and that the address of this this storage element (e. g. h3) is stored, in place of the address of the aforementioned storage unit (e. g. c2), as a reject address in that the storage element (e. g. in h1 at 12r) which, up until the storage of the aforementioned control instruction in the relevant chain of storage elements (e. g. h1, h4, hm) occupied the first position and subsequently occupies the second position.

**Revendications**

1. Circuit pour des installations de télécommunications, notamment pour des installations de centraux téléphoniques dans lesquelles des éléments de mémoire (h1, h2, . . . hm) pour la mémorisation individuelle d'ordres de commande devant être exécutés avec retard dans le temps peuvent être commandés, à l'aide d'adresses d'éléments de mémoire (pour c1 . . . cn) aussi bien au moyen d'un dispositif d'écriture de commande (G1) pour l'inscription d'ordres de commande (au niveau de h13, . . . h33, . . . h53) qu'également au moyen d'un dispositif de lecture de commande (A1, E1) pour la lecture d'ordres de commande mémorisés (au niveau de h13, . . . h33, . . . h53), et dans lesquelles, également à l'aide du dispositif d'écriture de commande (G1), dans chacun des éléments de mémoire (h1, h2 . . . hm), en plus de l'ordre de commande respectif, il peut être mémorisé un indicateur (au niveau de h12v, . . . h32v, . . . h52v) par l'intermédiaire duquel un autre élément de mémoire (h1, h2 . . . hm) peut être respectivement adressé, grâce à quoi au moyen d'une adresse d'un des éléments de mémoire (h1 . . . hm) qui est mémorisée dans une unité de mémoire (c1, . . . cn) et au moyen de l'indicateur (pour h12v, . . . h32v, . . . h52v) qui est mémorisé dans chacun des éléments de mémoire (h1, . . . hm), cette unité de mémoire (c1, . . . cn) est respectivement réunies à des éléments de mémoire (h1, . . . hm) pour former une chaîne dans laquelle l'adresse de l'élément de mémoire qui est mémorisée dans l'unité de mémoire (c1, . . . cn) et chacune des adresses mémorisée dans les éléments de mémoire (h1, . . . hm) indique l'élément de mémoire (h1, . . . hm) respectivement situé après dans la chaîne, et dans lesquelles, lors de la mémorisation d'un ordre de commande (au niveau de h13, . . . h33, . . . h53) dans un élément de mémoire (h1, . . . hm) qui est nouvellement sélectionné à cet effet et qui doit être associé à une unité de mémoire déterminée (c1, . . . cn) en liaison avec l'instant de consigne de l'exécution de cet ordre de commande, d'une part pour l'unité de mémoire concernée (c1, . . . cn) l'adresse d'élément de mémoire qui y est mémorisée est lue et est effacée dans celle-ci et est mémorisée, en tant qu'indicateur, dans l'élément de mémoire (h1, . . . hm) nouvellement sélectionné, et d'autre part son adresse d'élément de mémoire est mémorisée dans l'unité de mémoire concernée (c1, . . . cn), et dans lesquelles il est prévu un dispositif de comptage (T, U) commandé en cadence à l'aide de l'état de comptage respectivement obtenu duquel il est indiqué par le dispositif de mémoire (c1, . . . cn) ceux des éléments de mémoire (h1, . . . hm) pour lesquels des processus de lecture de commande sont arrivés à échéance dans le temps et doivent être introduits de façon correspondante, caractérisé par le fait qu'il est prévu un grand nombre d'unités de mémoire (c1, . . . cn) suivant une succession ordonnée, qu'en correspondance il est formé plusieurs chaînes d'éléments de mémoire (par exemple h1, h4, hm et h2, h5) indépendantes les unes des autres en combinant, avec respectivement une des unités de mémoire (par exemple c2 et c5), respectivement toujours uniquement des éléments de mémoire (par exemple h1, h4, hm ou h2) avec des ordres de commande mémorisés (pour h12, . . . h53) qui doivent être exécutés simultanément ou presque simultanément, par l'intermédiaire des indicateurs mémorisés (au niveau de h12v, . . . h52v), et que le dispositif de lecture de commande (A1, E1) fournit l'état de comptage du dispositif de comptage (T, U) grâce au fait qu'il est réglé à cet effet par le dispositif de comptage (T, U), successivement, à la file et individuellement, sur les unités de mémoire (c1, . . . cn) pour commander, à l'aide de l'adresse d'élément de mémoire (par exemple de h1) qui doit être lue à partir de l'unité de mémoire (par exemple c2) respectivement désignée par le réglage du dispositif de lecture de commande (A1, E1), la chaîne de ces seuls éléments de mémoire (par exemple h1, h4, hm), qui est associée à l'unité de mémoire respectivement atteinte (par exemple c2), par l'intermédiaire d'une combinaison d'adresses au moyen des indicateurs.

2. Circuit suivant la revendication 1, caractérisé par le fait que dans chacun des éléments de mémoire (h1, . . . hm) peut être mémorisée une adresse de renvoi (pour h12r, . . . h52r) par l'intermédiaire de laquelle est désigné l'élément de mémoire (par exemple h1, h4, hm) respectivement situé devant dans une chaîne d'éléments de mémoire (par exemple h1, h4, hm) ou l'unité de mémoire (par exemple c2) avec laquelle cette chaîne est combinée au moyen d'indicateurs mémorisés.

3. Circuit suivant la revendication 2, caractérisé par le fait que lors de la mémorisation d'un ordre de commande (pour h13, ... h53) dans un élément de mémoire (par exemple h3) sélectionné à cet effet et devant être associé à une unité de mémoire déterminée (par exemple c2) en liaison avec cet ordre de commande, l'adresse de cette unité de mémoire (par exemple c2) est mémorisée dans cet élément de mémoire (par exemple dans h3 pour h32r) en tant qu'adresse de renvoi, et que l'adresse de cet élément de mémoire (par exemple h3) est mémorisée, à la place de l'adresse de ladite unité de mémoire (par exemple c2), en tant qu'adresse de rejection, dans l'élément de mémoire (par exemple dans h1 pour 12r) qui se trouvait en première position dans la chaîne concernée d'éléments de mémoire (par exemple h1, h4, hm) jusqu'à la mémorisation dudit ordre de commande, et se trouve ensuite en seconde position.